# EUROPEAN PATENT SPECIFICATION

(11) **EP 4 578 880 B1**
(45) Date of publication and mention of the grant of the patent: **29.04.2026**
(21) Application number: 24223026.6
(22) Date of filing: 23.12.2024
(51) Int. Cl.: C08B 3/04, C08L 1/10, D01D 5/06, D01F 2/28

(54) **ESTERIFICATION METHOD OF CELLULOSE AND PREPARATION METHOD OF CELLULOSE FORMATE FILAMENT MATERIAL**
VERESTERUNGSVERFAHREN VON CELLULOSE UND VERFAHREN ZUR HERSTELLUNG VON CELLULOSEFORMIATFILAMENTMATERIAL
PROCÉDÉ D'ESTÉRIFICATION DE CELLULOSE ET PROCÉDÉ DE PRÉPARATION DE MATÉRIAU DE FILAMENT DE FORMIATE DE CELLULOSE

(30) Priority: 28.12.2023 CN 202311845769
(43) Date of publication of application: 02.07.2025
(73) Proprietor: Northeast Forestry University, Harbin, Heilongjiang 150040 (CN)
(72) Inventor: YU, Haipeng, Harbin City, 150040 (CN); TONG, Zhihan, Harbin City, 150040 (CN); ZENG, Suqing, Harbin City, 150040 (CN); LI, Xiaona, Harbin City, 150040 (CN)
(74) Representative: MERH-IP Matias Erny Reichl Hoffmann Patentanwälte PartG mbB

(56) References cited:
- TONG ZHIHAN ET AL: "A room temperature dissolution solvent and its mechanism for natural biopolymers: hydrogen bonding interaction investigation", GREEN CHEMISTRY, vol. 25, no. 13, 1 January 2023 (2023-01-01), GB, pages 5086 - 5096, XP093272248, ISSN: 1463-9262, DOI: 10.1039/D3GC01098H

## Description

### TECHNICAL FIELD

The present disclosure belongs to the technical field of cellulose renewable materials, and in particular relates to an esterification method of cellulose and a preparation method of a cellulose formate filament material.

### BACKGROUND

Cellulose is the most abundant natural organic polymer in earth, with a highly ordered hierarchical structure, excellent physical and mechanical properties, and unique chemical properties, as well as advantages such as cheap, easy availability, renewability, completely biodegradability, and excellent biocompatibility. These outstanding advantages make the cellulose suitable for preparation of sustainable high-performance materials, thus replacing non-degradable petroleum-based products and alleviating the pressure of environmental pollution and excessive energy consumption. However, the cellulose contains abundant hydroxyl groups on its molecular chain, which lead to the formation of dense intramolecular and intermolecular hydrogen bonds, as well as complex aggregate structures and crystalline structures. These factors hinder the process of chemically modifying cellulose molecules so as to improve solubility and processing properties of cellulose, thereby granting new functions, expanding application areas, and promoting highvalue utilization of the cellulose resources.

Viscose fiber is the mainstream product of renewable cellulose fiber, with low production cost and desirable softness, breathability, and hygroscopicity. However, the viscose fiber is also easy to break due to low strength, shows poor heat resistance and antibacterial properties, and can generate a large amount of toxic and harmful gases and waste liquids during the production, and thus has been gradually sifted out. Lyocell exhibits high strength and toughness and desirable durability, but requires high production cost, while a 4-methylmorpholine-N-oxide (NMMO) solvent used can be easily oxidized and has the risk of explosion during use, restricting its industrial production.

"Tong Z, Zeng S, Tang H, et al. A room temperature dissolution solvent and mechanism for natural biopolymers: hydrogen bonding interaction investigation [J]. Green Chemistry, 2023. DOI: 10.1039/d3gc01098h." has disclosed that a variety of renewable materials are constructed by treating with a mixed solvent consisting of zinc chloride, formic acid, and water at room temperature. However, a strong acidity of the mixed solvent causes the degradation of a cellulose macromolecular structure, resulting in renewable materials having a low strength of less than 200 MPa.

"Zhao Z, Gao H, Zhou L, et al. Preparation of renewable cellulose fibers by microfluidic spinning technology using ionic liquids as the solvents [J]. Cellulose, 2023, 30(12): 7535-7549. DOI: 10.1007/s10570-023-05301-w." has proposed use of 1-ethyl-3-methylimidazolium acetate/dimethyl sulfoxide as a solvent in preparation of a renewable cellulose fiber by microfluidic technology. However, the resulting renewable cellulose fiber has a low strength, showing a maximum tensile strength of only 218.14 MPa.

Cellulose can undergo esterification when being mixed with a concentrated formic acid solution (99 wt%). When a degree of substitution of formyl exceeds 1.3, the cellulose can be dissolved. However, such a process takes a long time (more than 24 h) and cannot dissolve cellulose with high molecular weight. Increasing the temperature or adding a catalyst (such as sulfuric acid, hydrochloric acid, and phosphoric acid) can accelerate the esterification. However, strong acid solutions cause cellulose degradation and make it difficult to homogeneously esterify cellulose with high molecular weight (with a degree of polymerization exceeding 1,000), thus resulting in the inability to obtain high-strength cellulose renewable materials.

### SUMMARY

In view of this, the present disclosure is to provide an esterification method of cellulose and a preparation method of a cellulose formate filament material. In the present disclosure, the esterification method of cellulose can homogeneously esterify the cellulose, obtaining a high-strength cellulose formate filament material.

To achieve the above objects, the present disclosure provides the following technical solutions:

In the present disclosure, an esterification method of cellulose is provided, including the following steps:
mixing cellulose with an esterification system to obtain a mixture, and subjecting the mixture to esterification; wherein
the esterification system comprises formic acid, zinc chloride, and water at a molar ratio of 3:1:2; and
a mass ratio of the cellulose to the esterification system in a range of 7.6: 100 to 8.7: 100.

In some embodiments, the esterification is conducted at a room temperature for 1 h to 12 h.

In some embodiments, the esterification is conducted for 2 h to 4 h.

The present disclosure further provides a preparation method of a cellulose formate filament material, including the following steps:
preparing a reaction solution containing a cellulose formate according to the above esterification method of cellulose; and
subjecting the reaction solution to filamentation, followed by coagulation, washing, and drying in sequence to obtain the cellulose formate filament material.

In some embodiments, the coagulation includes passing a precursor obtained by the filamentation through a calcium chloride aqueous solution coagulation bath and an ethanol coagulation bath in sequence.

In some embodiments, the calcium chloride aqueous solution coagulation bath has a concentration of 20 wt% to 45 wt%.

The present disclosure further provides a cellulose formate filament material prepared by the above preparation method, wherein the cellulose formate filament material has a diameter of 20 µm to 100 µm.

Compared with the prior art, some embodiments of the present disclosure have the following beneficial effects:
The esterification method of cellulose includes the following steps: mixing cellulose with an esterification system to obtain a mixture and subjecting the mixture to esterification; where the esterification system comprises formic acid, zinc chloride, and water at a molar ratio of (2-4):1:(1-2). An esterification system with a specific molar ratio can homogeneously esterify cellulose macromolecules at room temperature. The zinc chloride provides zinc ions and chloride ions, and the formic acid provides hydrogen ions, which form hydrogen bonds with oxygen atoms or hydrogen atoms of hydroxyl groups from cellulose, thereby destroying the hydrogen bond network of cellulose and releasing free hydroxyl groups. The unionized formic acid molecules and free hydroxyl groups form cellulose formate through esterification. Water molecules promote the ionization of zinc chloride and formic acid, regulate their hydrolysis of cellulose, and retain the macromolecular structure of cellulose. Cellulose formate samples in examples all show a degree of substitution of not less than 0.6, thereby promoting the preparation of a high-strength cellulose formate filament material.

The present disclosure further provides a preparation method of a cellulose formate filament material. The reaction solution containing a cellulose formate obtained by esterification of cellulose is used to promote the orientation of cellulose formate molecular chains through "dry-jet wet-spinning" and air drawing, the oriented molecular chains are anchored by calcium ion cross-linking, and the oriented molecular chains are tightly combined by ethanol molecules to obtain an ultra-high strength cellulose formate filament material. The data of examples show that the cellulose formate filament material has a tensile strength of not less than 1 GPa.

### BRIEF DESCRIPTION OF THE DRAWINGS

To describe the technical solutions in examples of the present disclosure or in the prior art more clearly, the accompanying drawings required for the examples are briefly described below. Apparently, the accompanying drawings in the following description show merely some examples of the present disclosure, and those skilled in the art may still derive other accompanying drawings from these accompanying drawings without creative efforts.
FIG. 1 shows a schematic diagram of esterification of cellulose with formic acid/zinc chloride/aqueous solution in an embodiment;
FIG. 2 shows X-ray diffraction (XRD) patterns of the cellulose raw material and the renewable cellulose in Example 4;
FIG. 3 shows infrared images of the cellulose raw material and the renewable cellulose in Example 4;
FIG. 4 shows ¹³C solid state nuclear magnetic resonance images of the cellulose raw material and the renewable cellulose in Example 4;
FIG. 5 shows a schematic diagram of the "dry-jet wet-spinning" process in an embodiment;
FIG. 6 shows a physical object picture of the injection pump in an embodiment;
FIG. 7 shows a physical object picture of air drawing at room temperature in an embodiment;
FIG. 8 shows a physical object picture of the cellulose formate filament material in Example 4; and
FIG. 9 shows a tensile mechanical curve of the cellulose formate filament material in Example 4.

### DETAILED DESCRIPTION OF THE EMBODIMENTS

The present disclosure provides an esterification method of cellulose, including the following steps:
mixing cellulose with an esterification system to obtain a mixture and subjecting the mixture to esterification; where
the esterification system comprises formic acid, zinc chloride, and water at a molar ratio of 3:1:2; and
a mass ratio of the cellulose to the esterification system in a range of 7.6: 100 to 8.7: 100.

In the present disclosure, unless otherwise specified, all materials and equipment used are commercially available items in the art.

In some embodiments of the present disclosure, the zinc chloride provides zinc ions and chloride ions, and the formic acid provides hydrogen ions, which form hydrogen bonds with oxygen atoms or hydrogen atoms of hydroxyl groups from cellulose, thereby destroying the hydrogen bond network of cellulose and releasing free hydroxyl groups. The unionized formic acid molecules and free hydroxyl groups form cellulose formate through esterification. Water molecules promote the ionization of zinc chloride and formic acid, regulate their hydrolysis effect for cellulose, and retain the macromolecular structure of cellulose.

In some embodiments of the present disclosure, the esterification system is obtained by mixing formic acid, zinc chloride, and water. There is no special requirement for a process of mixing the formic acid, zinc chloride, and water, as long as they are mixed evenly. In a specific example, the mixing is conducted by continuous stirring at room temperature.

In some embodiments of the present disclosure, the cellulose is pulp cellulose, and the pulp cellulose has a degree of polymerization greater than 1,500, particularly 1,539, and a crystallinity of 30% to 80%, particularly 40% to 60%, and more particularly 53.58%.

In some embodiments of the present disclosure, the esterification is conducted at room temperature for 1 h to 12 h, particularly 2 h to 4 h, and even more particularly 2.5 h to 3 h. In some embodiments, the esterification is conducted under stirring; there is no special requirement for a stirring speed, and the speed commonly used by those skilled in the art may be used.

In some embodiments of the present disclosure, a reaction equation of the esterification is shown in Formula I. During the esterification, the hydroxyl group of cellulose reacts with the carboxyl group of formic acid to generate cellulose formate.

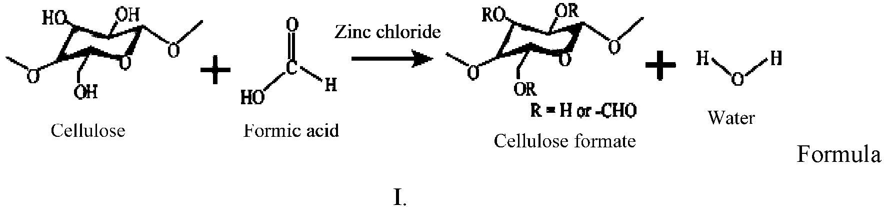

The present disclosure further provides a preparation method of a cellulose formate filament material, including the following steps:
preparing a reaction solution containing a cellulose formate according to the above esterification method of cellulose; and
subjecting the reaction solution to filamentation, followed by coagulation, washing, and drying in sequence to obtain the cellulose formate filament material.

In some embodiments of the present disclosure, according to the above esterification method of cellulose, the cellulose and an esterification system are mixed and subjected to esterification to obtain a reaction solution containing the cellulose formate.

In some embodiments of the present disclosure, after the cellulose and the esterification system are mixed and subjected to esterification, air bubbles are removed in the reaction solution, and the air bubbles in the reaction solution are removed by centrifugation.

In some embodiments of the present disclosure, the reaction solution is subjected to filamentation, and then an obtained precursor is subjected to coagulation, washing, and drying in sequence to obtain the cellulose formate filament material.

In some embodiments of the present disclosure, the filamentation of the reaction solution includes "dry-jet wet-spinning" and air drawing. In a specific embodiment, the reaction solution is loaded into a syringe, and then the solution containing the cellulose formate is squeezed out of the syringe by a syringe pump. A syringe outlet is at a distance from a coagulation bath surface, and the ejected filaments are oriented and stretched in the air due to their own gravity. In some embodiments, the syringe outlet has a diameter of 900 µm; the syringe outlet has a height of 25 cm from the coagulation bath surface, which will not cause filament breakage, and the obtained filament material has a suitable diameter and desirable tensile mechanical properties.

In some embodiments of the present disclosure, the coagulation includes passing an obtained precursor after filamentation through a calcium chloride aqueous solution coagulation bath and an ethanol coagulation bath sequentially to obtain a gel fiber of the cellulose formate. The coagulation is to achieve the anchoring and tight assembly of the oriented cellulose formate molecular chains.

In some embodiments of the present disclosure, the precursor after filamentation is in the calcium chloride aqueous solution coagulation bath. Due to a cross-linking effect of calcium ions, the ability of the stretched oriented filaments to recover to the free curling state is weakened, that is, the orientation of the cellulose long chain is eliminated, thereby anchoring the oriented cellulose molecular chains. In the ethanol coagulation bath, the ethanol molecules make the oriented cellulose molecular chains approach each other and assemble into tightly arranged gel fibers of cellulose formate.

In some embodiments of the present disclosure, the calcium chloride aqueous solution coagulation bath has a concentration of 20 wt% to 45 wt%, particularly 40 wt%.

In some embodiments of the present disclosure, the washing is water washing, which serves to wash away the solvent and impurities.

In some embodiments of the present disclosure, the drying is air-drying at room temperature, and the air-drying is conducted for 4 h, which serves to volatilize water molecules.

The present disclosure further provides a cellulose formate filament material prepared by the preparation method, where the cellulose formate filament material has a diameter of 20 µm to 100 µm.

In some embodiments of the present disclosure, the cellulose formate filament material has a diameter of 20 µm to 40 µm.

In some embodiments of the present disclosure, the cellulose molecular chains are highly oriented through "dry-jet wet-spinning" and air drawing, the oriented cellulose molecular chains are then cross-linked and anchored by calcium ions, and the oriented cellulose molecular chains are tightly combined by ethanol molecules, thus ultimately obtaining an ultrahigh-strength cellulose formate filament material (with a strength of not less than 1 GPa).

In order to further illustrate the present disclosure, the esterification method of cellulose and the preparation method of a cellulose formate filament material provided by the present disclosure is described in detail below in conjunction with accompanying drawings and examples, but these examples should not be understood as limiting the claimed scope of the present disclosure.

In an example of the present disclosure, the cellulose was industrial-grade pulp cellulose having a degree of polymerization of 1,539 and a crystallinity of 53.58%.

### Comparative Example 1

7.6 g of pulp cellulose was added into 100 g of formic acid/zinc chloride/water solution (a molar ratio of the formic acid, the zinc chloride, and the water was in a range of 4:1:1) and stirred at room temperature for 2 h to obtain a solution containing cellulose formate. The solution containing cellulose formate was centrifuged to remove air bubbles and loaded into a syringe, and then extruded from the syringe using a syringe pump (a syringe outlet was 25 cm away from the coagulation bath surface), and the ejected filaments were oriented and stretched in the air. The filaments were subj ected to two coagulation baths of a calcium chloride aqueous solution (40 wt%) and ethanol to form gel fibers of cellulose formate, which were washed with water to remove solvent and impurities, and then placed in the air to volatilize water molecules therein to obtain a cellulose formate filament material (renewable cellulose) with a diameter of 20 µm to 40 µm.

### Comparative Example 2

7.6 g of pulp cellulose was added into 100 g of formic acid/zinc chloride/water solution (a molar ratio of the formic acid, the zinc chloride, and the water was in the range of 2:1:2) and stirred at room temperature for 2.5 h to obtain a solution containing cellulose formate. The solution containing cellulose formate was centrifuged to remove air bubbles and loaded into a syringe, and then extruded from the syringe using a syringe pump (a syringe outlet was 25 cm away from the coagulation bath surface), and the ejected filaments were oriented and stretched in the air. The filaments were subj ected to two coagulation baths of a calcium chloride aqueous solution (40 wt%) and ethanol to form gel fibers of cellulose formate, which were washed with water to remove solvent and impurities, and then placed in the air to volatilize water molecules therein to obtain a cellulose formate filament material (renewable cellulose) with a diameter of 20 µm to 40 µm.

### Example 1

7.6 g of pulp cellulose was added into 100 g of formic acid/zinc chloride/water solution (a molar ratio of the formic acid, the zinc chloride, and the water was in the range of 3:1:2) and stirred at room temperature for 2.5 h to obtain a solution containing cellulose formate. The solution containing cellulose formate was centrifuged to remove air bubbles and loaded into a syringe, and then extruded from the syringe using a syringe pump (a syringe outlet was 25 cm away from the coagulation bath surface), and the ejected filaments were oriented and stretched in the air. The filaments were subj ected to two coagulation baths of a calcium chloride aqueous solution (40 wt%) and ethanol to form gel fibers of cellulose formate, which were washed with water to remove solvent and impurities, and then placed in the air to volatilize water molecules therein to obtain a cellulose formate filament material (renewable cellulose) with a diameter of 20 µm to 40 µm.

### Example 2

8.7 g of pulp cellulose was added into 100 g of formic acid/zinc chloride/water solution (a molar ratio of the formic acid, the zinc chloride, and the water was in the range of 3:1:2) and stirred at room temperature for 3 h to obtain a solution containing cellulose formate. The solution containing cellulose formate was centrifuged to remove air bubbles and loaded into a syringe, and then extruded from the syringe using a syringe pump (a syringe outlet was 25 cm away from the coagulation bath surface), and the ejected filaments were oriented and stretched in the air. The filaments were subj ected to two coagulation baths of a calcium chloride aqueous solution (40 wt%) and ethanol to form gel fibers of cellulose formate, which were washed with water to remove solvent and impurities, and then placed in the air to volatilize water molecules therein to obtain a cellulose formate filament material (renewable cellulose) with a diameter of 20 µm to 40 µm.

### Example 3

9.9 g of pulp cellulose was added into 100 g of formic acid/zinc chloride/water solution (a molar ratio of the formic acid, the zinc chloride, and the water was in the range of 3:1:2) and stirred at room temperature for 4 h to obtain a solution containing cellulose formate. The solution containing cellulose formate was centrifuged to remove air bubbles and loaded into a syringe, and then extruded from the syringe using a syringe pump (a syringe outlet was 25 cm away from the coagulation bath surface), and the ejected filaments were oriented and stretched in the air. The filaments were subj ected to two coagulation baths of a calcium chloride aqueous solution (40 wt%) and ethanol to form gel fibers of cellulose formate, which were washed with water to remove solvent and impurities, and then placed in the air to volatilize water molecules therein to obtain a cellulose formate filament material (renewable cellulose) with a diameter of 20 µm to 40 µm.

Table 1 shows test results of the cellulose formate filament materials prepared in comparative Examples 1-2 and Examples 1 to 3:

**Table 1 Test results of cellulose formate filament materials prepared in comparative Examples 1-2 and Examples 1 to 3 [0074]**

| | Comparative Example 1 | Comparative Example 2 | Example 1 | Example 2 | Example 3 |
|---|---|---|---|---|---|
| Cellulose dissolution ratio | 7% | 7% | 7% | 8% | 9% |
| Degree of substitution of cellulose formate | 0.72 | 0.62 | 0.69 | 0.67 | 0.63 |
| Degree of polymerization of renewable cellulose | 738 | 906 | 1184 | 1093 | 974 |
| Tensile strength of filament material (MPa) | 339 | 818 | 1010 | 1024 | 1014 |

| | | | | | |
|---|---|---|---|---|---|
| NOTE: dissolution ratio = cellulose mass/(cellulose mass + solvent mass) × 100%; the degree of polymerization of cellulose was determined by the copper ethylenediamine method, and the degree of substitution (DS) of cellulose formate was determined by the back-titration method. A tensile strength was measured by using a micrometer to measure the diameter of the filament. The sample was stretched at a constant speed of 10 mm/min using an A-700S universal mechanical testing machine until the sample broke, thereby obtaining a stress-strain curve. | | | | | |

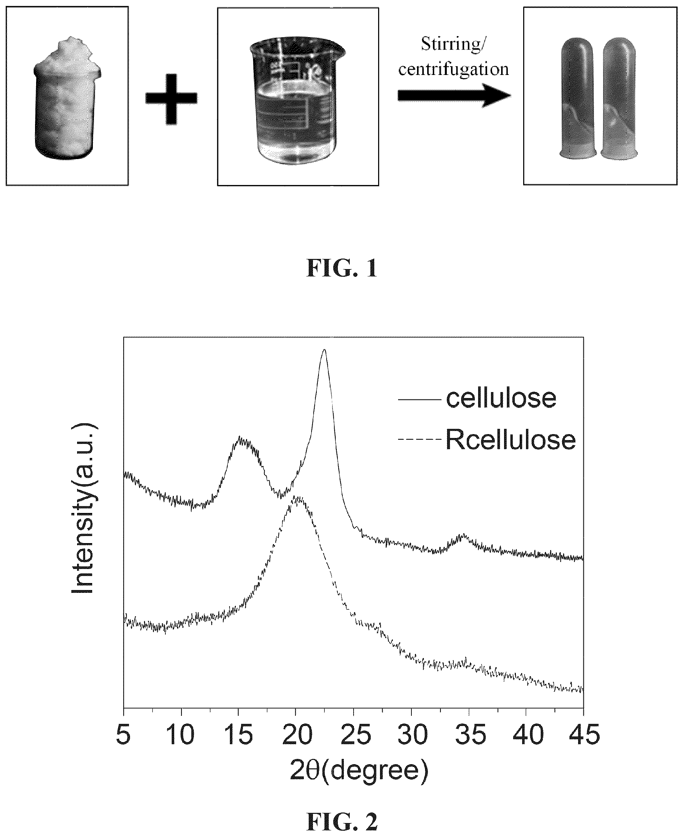

FIG. 1 shows a schematic diagram of esterification of cellulose with formic acid/zinc chloride/aqueous solution. The cellulose was esterified in the esterification system, and zinc ions, chloride ions, and hydrogen ions in the esterification system destroyed the hydrogen bonds of the cellulose, thus dissolving the cellulose into a solution to release free hydroxyl groups. Then, the free hydroxyl groups and the unionized formic acid molecules were esterified to obtain a reaction solution containing the cellulose formate, which was a viscous and flowable liquid, and then the liquid flowed into a syringe for spinning by a tape casting method.

FIG. 2 shows XRD patterns of the cellulose raw material and the renewable cellulose in Example 2. The cellulose raw material has diffraction peaks at 2θ=15.2° and 22.5°, both of which are natural cellulose type I, and the chemically modified cellulose has a diffraction peak at 2θ=20.3°, which is cellulose type II. The transformation of the cellulose crystal structure shows that the modification of cellulose is a homogeneous dissolution and esterification process.

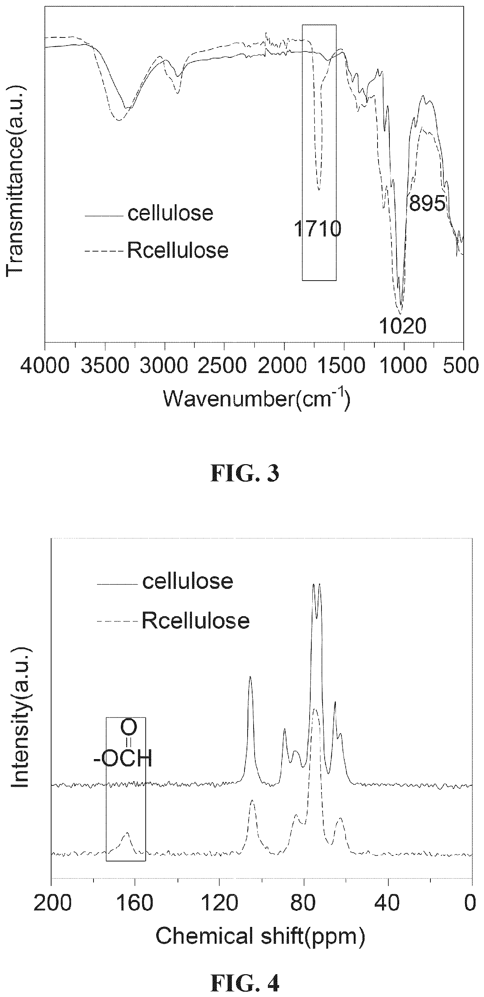

FIG. 3 shows infrared images of the cellulose raw material and the renewable cellulose in Example 2; FIG. 4 shows ¹³C solid state nuclear magnetic resonance images of the cellulose raw material and the renewable cellulose in Example 2. The renewable cellulose in the infrared image shows a new peak at 1,710 cm⁻¹, while the renewable cellulose in the solid NMR image shows a new peak at 163 ppm, both of which prove that cellulose has been esterified to obtain cellulose formate.

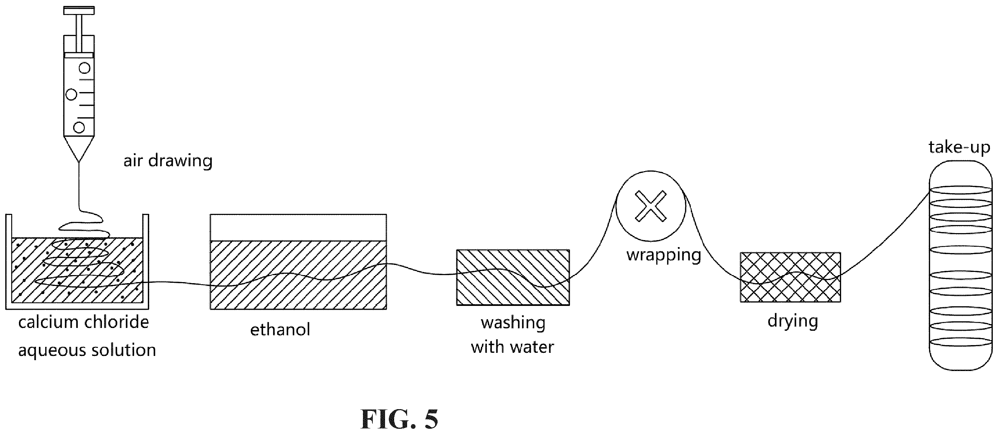

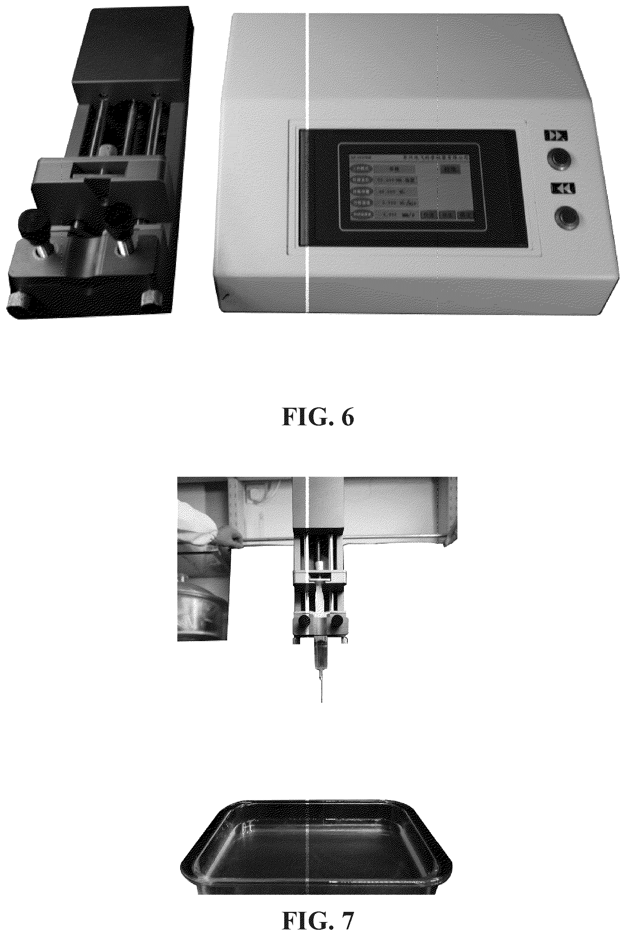

FIG. 5 shows a schematic diagram of the "dry-jet wet-spinning" process; FIG. 6 shows a physical object picture of the injection pump; FIG. 7 shows a physical object picture of air drawing at room temperature. The orientation of cellulose formate molecular chains was promoted through "dry-jet wet-spinning" and air drawing at room temperature, the oriented molecular chains were anchored by calcium ion cross-linking, and ethanol molecules induced the oriented molecular chains to be tightly combined. Finally, ultra high-strength cellulose formate filament material was prepared through water washing and drying.

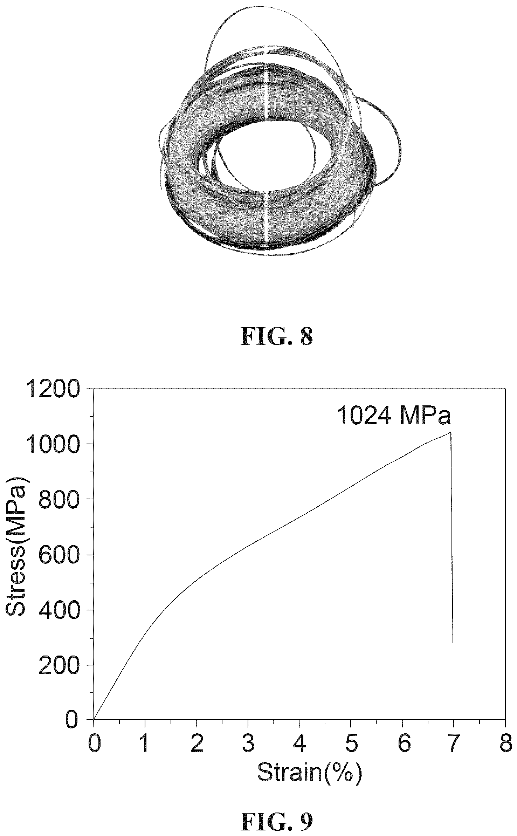

FIG. 8 shows a physical object picture of the cellulose formate filament material in Example 2; and FIG. 9 shows a tensile mechanical curve of the cellulose formate filament material in Example 2. The cellulose formate filament material has a tensile strength of up to 1,024 MPa, which is superior to that of the renewable cellulose filament material prepared by the prior art.

Although the above embodiment has described the present disclosure in detail, it is only a part of, not all of, the embodiment of the present disclosure. Other embodiments may also be obtained by persons based on the embodiment without creative efforts, and all of these embodiments shall fall within the scope of the present disclosure.

## Claims

1. An esterification method of cellulose, comprising:
mixing cellulose with an esterification system to obtain a mixture, and subjecting the mixture to esterification,
**characterized in that**,
the esterification system comprises formic acid, zinc chloride, and water at a molar ratio of 3: 1: 2; and
a mass ratio of the cellulose to the esterification system is in a range of 7.6: 100 to 8.7: 100.

2. The esterification method of claim 1, wherein the esterification is conducted at room temperature for 1 h to 12 h.

3. The esterification method of claim 2, wherein the esterification is conducted for 2 h to 4 h.

4. A preparation method of a cellulose formate filament material, comprising:
preparing a reaction solution containing a cellulose formate according to the esterification method of any one of claims 1 to 3; and
subjecting the reaction solution to filamentation, followed by coagulation, washing, and drying in sequence to obtain the cellulose formate filament material.

5. The preparation method of claim 4, wherein the coagulation comprises passing a precursor obtained by the filamentation through a calcium chloride aqueous solution coagulation bath and an ethanol coagulation bath in sequence.

6. The preparation method of claim 5, wherein the calcium chloride aqueous solution coagulation bath has a concentration of 20 wt% to 45 wt%.

7. A cellulose formate filament material prepared by the preparation method of any one of claims 4 to 6, wherein the cellulose formate filament material has a diameter of 20 µm to 100 µm.

## Patentansprüche

1. Verfahren zur Veresterung von Cellulose, umfassend:
Mischen von Cellulose mit einem Veresterungssystem, um eine Mischung zu erhalten, und Unterwerfen der Mischung einer Veresterung,
**dadurch gekennzeichnet, dass**
das Veresterungssystem Ameisensäure, Zinkchlorid und Wasser in einem Molverhältnis von 3:1:2 umfasst; und
ein Massenverhältnis der Cellulose zu dem Veresterungssystem in einem Bereich von 7,6:100 bis 8,7:100 liegt.

2. Veresterungsverfahren nach Anspruch 1, wobei die Veresterung bei Raumtemperatur für 1 h bis 12 h durchgeführt wird.

3. Veresterungsverfahren nach Anspruch 2, wobei die Veresterung für 2 h bis 4 h durchgeführt wird.

4. Verfahren zur Herstellung eines Celluloseformiat-Filamentmaterials, umfassend:
Herstellen einer Reaktionslösung, die ein Celluloseformiat enthält, gemäß dem Veresterungsverfahren nach einem der Ansprüche 1 bis 3; und
Unterwerfen der Reaktionslösung einer Filamentierung, gefolgt von Koagulation, Waschen und Trocknen der Reihe nach, um das Celluloseformiat-Filamentmaterial zu erhalten.

5. Herstellungsverfahren nach Anspruch 4, wobei die Koagulation ein Leiten eines durch die Filamentierung erhaltenen Vorläufers durch ein Koagulationsbad mit wässriger Calciumchloridlösung und ein Ethanolkoagulationsbad der Reihe nach umfasst.

6. Herstellungsverfahren nach Anspruch 5, wobei das Koagulationsbad mit wässriger Calciumchloridlösung eine Konzentration von 20 Gew.-% bis 45 Gew.-% aufweist.

7. Celluloseformiat-Filamentmaterial, hergestellt durch das Herstellungsverfahren nach einem der Ansprüche 4 bis 6, wobei das Celluloseformiat-Filamentmaterial einen Durchmesser von 20 µm bis 100 µm aufweist.

## Revendications

1. Procédé d'estérification de cellulose, comprenant :
le mélange de cellulose avec un système d'estérification pour obtenir un mélange, et la soumission du mélange à une estérification,
**caractérisé en ce que**,
le système d'estérification comprend de l'acide formique, du chlorure de zinc, et de l'eau à un rapport molaire de 3:1:2 ; et
un rapport massique de la cellulose au système d'estérification est dans une plage de 7,6:100 à 8,7:100.

2. Procédé d'estérification selon la revendication 1, dans lequel l'estérification est conduite à température ambiante pendant 1 h à 12 h.

3. Procédé d'estérification selon la revendication 2, dans lequel l'estérification est conduite pendant 2 h à 4 h.

4. Procédé de préparation d'un matériau de filament de formiate de cellulose, comprenant :
la préparation d'une solution réactionnelle contenant un formiate de cellulose selon le procédé d'estérification selon l'une quelconque des revendications 1 à 3 ; et
la soumission de la solution réactionnelle à une filamentation, suivie d'une coagulation, d'un lavage et d'un séchage en séquence pour obtenir le matériau de filament de formiate de cellulose.

5. Procédé de préparation selon la revendication 4, dans lequel la coagulation comprend le passage d'un précurseur obtenu par la filamentation à travers un bain de coagulation en solution aqueuse de chlorure de calcium et un bain de coagulation d'éthanol en séquence.

6. Procédé de préparation selon la revendication 5, dans lequel le bain de coagulation en solution aqueuse de chlorure de calcium a une concentration de 20 % en poids à 45 % en poids.

7. Matériau de filament de formiate de cellulose préparé par le procédé de préparation selon l'une quelconque des revendications 4 à 6, dans lequel le matériau de filament de formiate de cellulose a un diamètre de 20 µm à 100 µm.
